# EUROPEAN PATENT APPLICATION

(11) **EP 2 028 787 A1**
(43) Date of publication of application: **25.02.2009**
(21) Application number: 07016394.4
(22) Date of filing: 22.08.2007
(51) Int. Cl.: H04L 12/24, H04L 12/26, H04L 12/46, H04L 29/06

(54) **Service discovery in communication networks**

(71) Applicant: Nokia Siemens Networks Oy, 02610 Espoo (FI)
(72) Inventor: Almeida, Tiago, 1800-079 Lisboa (Portugal) (PT); Cruz, Joana, PT-2795-152 Linda-a-Velha (Portugal) (PT)
(74) Representative: Fischer, Michael

(57) **Abstract**

In order to discover a service (TV, T, I) that operates within a virtual network virtual network (VLAN1), the virtual network (VLAN1) is identified by identifying at least two end points (PNI, UNI1, UNI2, UNI3) of the virtual network (VLAN1). Quality of Service data (QoS-data) about the at least two end points (PNI, UNi1, UNI2, UNI3) is furnished to the network management system (NMS). The service (TV, T, I) is identified by correlating the QoS-data from the at least two end points (PNI, UNil, UNI2, UNI3).

## Description

The present invention relates to the technical field of service discovery in communication networks.

In order to manage a communication network, methods are known, enabling network discovery by identifying devices and the topology of the network. Such methods are for example disclosed in US2001125518-A1 and in US2003097438-A1.

There are also some methods known enabling not only discovery of network elements, but also discovery of virtual local area networks and virtual private networks within a physical network:
US2004042416-A1 discloses automatic discovery of an existing Virtual Local Area Network (VLAN) configuration in a bridged network by gathering nodal VLAN configurations from all data transport nodes, and correlating data transport infrastructure information, node configuration information and nodal VLAN configurations. In a similar way US6765881-B1 discloses a method for discovering virtual private network tunnel according to the spanning tree protocol configurations and US2006080421-A1 presents a method for automating membership discovery in a distributed computer network. The Cisco IP Solution Center Layer 2 VPN Management 4.2 (http://www.cisco.com/en/US/products/sw/netmgtsw/ps5331/produ cts data sheet09186a008017d74c.html) also provides a solution for discovering a VLAN automatically.

The methods according to the above mentioned state of the art provide no solution for discovering multiple services that run within a VLAN. As an example triple play services (television, voice and internet) that run within a VLAN can not be discovered as distinct services. However, in order to manage a network and in order to resolve errors of the network and errors of services using the network, it is useful to gather information about services that use the network. It is therefore the objective of the present invention to discover a service within an Ethernet based network. This is achieved by the measures taken according to the independent claims.

The invention involves an Ethernet based network that is managed by a network management system. The Ethernet based network is used by a virtual network. The service that is to be discovered operates within the virtual network. The virtual network is identified by identifying at least two end points of the virtual network. Quality of Service data (QoS-data) about the at least two end points is furnished to the network management system. The service is identified by correlating the QoS-data from the at least two end points.

The invention therefore enables service discovery within a virtual network such as a VLAN. A significant advantage of the invention is, that it becomes possible to discover different services within a VLAN. As an example, providers of triple play services offer three services: telephony, internet access and television over a single physical line. For each customer a virtual LAN which contains all three services is therefore implemented. Having an identification of a customer's VLAN, the three services can be discovered and separately addressed since they are based on different QoS-data. As an example each one of the three services requires a different bandwidth profile and a different traffic class.

According to a preferred embodiment of the invention the QoS-data therefore comprises a traffic class and/or a bandwidth profile of the service. If for example a single virtual connection is used for each customer in order provide the customers with triple play services, the three services (television, internet access, telephone access) can be discovered, since each service requires a different traffic class.

According to a further preferred embodiment the traffic class is implemented according to at least the mandatory recommendations of IEEE 802.1p and/or IEEE 802.1d or to the technical specifications according to Metro Ethernet Forum (preferably MEF 10.1).

According to yet a further preferred embodiment the bandwidth profile is implemented according to the recommendations of IEEE 802.1p and/or IEEE 802.1d or to the technical specifications according to Metro Ethernet Forum (preferably MEF 10.1).

According to yet a further preferred embodiment the virtual connection is a virtual local area network (VLAN) which fulfils at least the mandatory recommendations of IEEE 802.1q or to the technical specifications according to Metro Ethernet Forum (preferably MEF 10.1).

According to yet a further preferred embodiment additionally to the user QoS-data, a type of the virtual connection is identified in order to discover the service. As an example, in case the type of the virtual connection is a point to multipoint virtual connection, it can be excluded that the service is a point-to-point service. In the example of triple play services, a point-to-multipoint virtual connection indicates that the service might be television broadcast or multicast. By additionally analyzing the bandwidth profile, a high downlink bandwidth together with a low uplink bandwidth will be interpreted by the network management system as another strong evidence for a television service.

According to yet another preferred embodiment, the correlating of the QoS-data is performed by identifying the same virtual connection and at least one identical QOS-data-parameter in the at least two end points. For the example of triple play, with one single virtual connection for each customer, the same identification for the two end points, together with the same traffic class for the-two end points, is sufficient for identifying the service.

According to yet another preferred embodiment, the Quality of Service data (QoS-data) is collected from the at least two end points and transferred to the network management system. This way, synchronizing of a management information base of the network management system with the end-points can easily performed.

The invention is in the following described based on preferred embodiments according to the figures:
Figure 1 describes an embodiment of the invention based on a simplified scheme of a network, that is adapted to be used by a provider of triple play services.
Figure 2 describes an embodiment of the invention based on a network architecture with a service using one provider-network-interface (PNI) and two user-network-interfaces (UNI).
Figure 3 describes an embodiment of the invention based on a network architecture with a service using one PNI and a network element comprising two UNIs with enabled and disabled port isolation.
Figure 4 describes an embodiment of the invention based on a network architecture with a virtual line that is used by two services.
Figure 5 describes an embodiment of the invention based on a network architecture where a service uses a multipoint-to-multipoint connection.
Figure 6 describes an embodiment of the invention based on a network architecture with two virtual connections being detected.
Figure 7 describes an embodiment of the invention based on a network architecture with two virtual connections being detected.
Figure 8 describes an embodiment of the invention based on a network architecture with two services being detected within one virtual local area network.

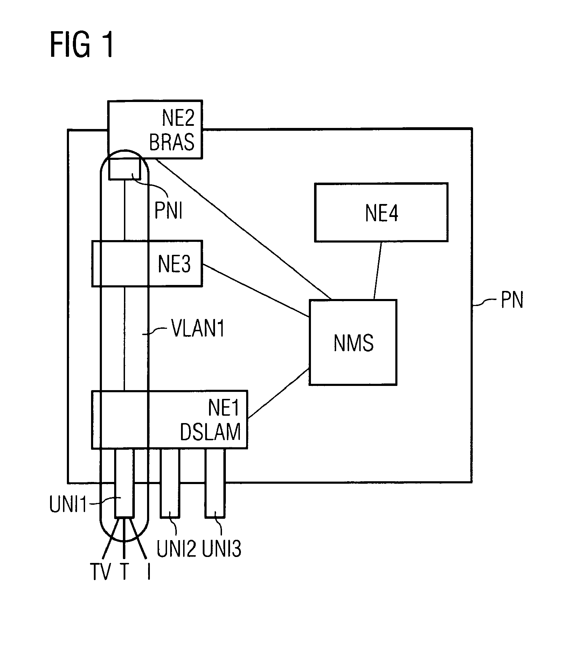

Figure 1 shows a simplified scheme of a provider network PN that is based on Ethernet technology and that is adapted to be used by a provider for offering triple play services to residential customers. The network PN comprises a plurality of network elements NE1, NE2, NE3, NE4. In the embodiment of figure 1 NE1 is a Digital Subscriber Line Access Multiplexer DSLAM, and NE2 is a Broadband Remote Access Server BRAS. The BRAS comprises a provider-network-interface PNI and the DSLAM comprises a plurality of user-network-interfaces UNI1, UNI2, UNI3. Each of the user-network-interfaces UNI1, UNI2, UNI3 is adapted to connect the provider network PN to a residential customer.

A virtual local area network VLAN1 uses the provider network PN and connects the UNI1 to the PNI. In the embodiment of figure 1, the VLAN1 is used by triple play services, i.e. television TV, telephone T and internet access I. In order to discover services that are operative on network elements NE1, NE2, NE3, NE4 of the provider network PN, parameters such as configuration parameters of the VLANs and network elements are furnished to a network management system NMS. Additionally, quality-of-service-data (QoS-data) of services that are operative within the VLAN1 are collected from the UNI1 and the PNI. The QoS-data are transferred to the NMS. In the NMS the QoS-data are correlated. In case for VLAN1 the QoS-data are identical for the UNI1 and the PNI, the service underlying the QoS-data is identical.

In order to discover triple play services within a VLAN, it is sufficient to know the traffic class of the service. The traffic class can be inferred from the priority bits (IEEE 802.1p) on the VLAN tag of an Ethernet frame and/or from the configuration of the network element. This means that on a user-network-interface and on a provider-network-interface it is possible to distinguish service frames carrying the same VLAN ID but with different priority marking, corresponding to different services and/or user data flows. In other words, different traffic classes can be used for distinguishing different services within a VLAN. The identified services from the user-network-interface and from the provider-network-interface can be distinguished based on the traffic class and on the VLAN ID.

With regard to the embodiment of figure 1, alternatively to the traffic class, also the bandwidth profile together with the VLAN ID can be used in order to correlate and identify a service in two end points. This can for example be done by using a bandwidth profile attribute (and not necessarily the whole set of bandwidth Profile attributes) in order to correlate services, along with a VLAN ID. Ethernet switches use the traffic class in order to assign the Ethernet frames a given priority and, as a consequence, to distribute the Ethernet frames into separate queues, according to the corresponding priority. Some Traffic Classes are used to configure services that require guaranteed bandwidth. A committed bandwidth can be used as an indicator for a telephone service or a television broadcast service. The Bandwidth Profile for an Ethernet service usually comprises the following traffic parameters:
- CIR (Committed Information Rate)
- CBS (Committed Burst Size)
- EIR (Excess Information Rate)
- EBS (Excess Burst Size)

According to a further preferred embodiment, the Ethernet network is based on layer-2-Switches including VLANs that are used to achieve Ethernet Virtual Connection (EVC) connectivity (which allows isolation of traffic flowing through the same network element), so in this context these EVCs are designated as VLAN EVCs.

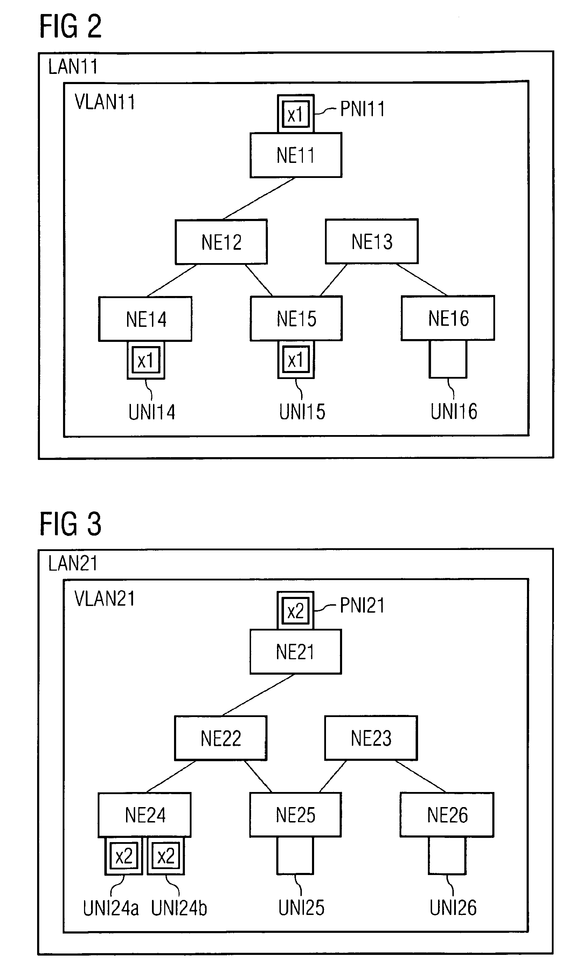

In a network, two types of services can be found: Ethernet line services (E-Line) which are used for Ethernet point-to-point connectivity, and Ethernet LAN Services (E-LAN) which provide point to multipoint or multipoint to multipoint connectivity. According to the ports existing in the path of the virtual connection, E-Line services can be discovered if the path has one UNI (user-network-interface) port and one PNI (provider-network-interface) port, or only two UNIs or only two PNIs. An E-LAN Service typically involves more than two end-points. Therefore according to further preferred embodiments described in figures 2 to 8, the way how end points are distributed in the network is used as a further indicator for discovering services. According to these embodiments, for some or for all end points of a virtual connection, QoS-data (for example traffic class and bandwidth profile) are retrieved. If this information is associated to a plurality of ports using the virtual connection (typically a user-network-interface or a provider-network-interface), it is assumed that a service is using this virtual connection and that said plurality of ports are end points of the service.

After identifying the end points of a Service, the end points can be interconnected, so the path (a set of routes, each route interconnecting a pair of end points) will be calculated, based in the routes of the VLAN EVC, between each pair of end points. The calculated routes are then associated to the service. Additionally, for every discovered Service a CAC (Connection Admission Control) algorithm may run, in order to compute the requested bandwidth over the resources allocated by the service path.

In the embodiment of Figure 2, a local area network LAN11 comprises a virtual local area network VLAN11. A service that operates within the VLAN11 is to be discovered. The LAN11 comprises network elements NE11, NE12, NE13, NE14, NE15, NE16. NE11 comprises a provider-network-interface PNI11. NE14, NE15, NE16 comprise each a user-network-interface UNI14, UNI15, UNI16. The end points of the service are the user-network-interfaces UNI14, UNI15 of the network elements NE14, NE15 and the PNI11 of NE11. A user data flow for the service is therefore detected in UNI14 and UNI15 based on QoS-data x1. In this example the QoS-data x1 preferably comprises the traffic class. In UNI16, which is also part of the VLAN11, no service with the QoS-data x1 is detected, thus the service is not detected. Based on a correlation of an identification of VAN11 and on the QoS-data x1, the end points of the service PNI11, UNI14, UNI15 can be identified as endpoints of the service. In the context of triple play, due to the point-to-multipoint connectivity, such a constellation of end points for a service, with one provider-network-interface and several user-network-interfaces being assigned to the same service, indicates that the underlying service is a broadcasting or multicasting service. The service might therefore be a television service.

Figure 3 shows a local area network LAN21 with a virtual local area network VLAN21. LAN21 comprises NE21, NE22, NE23, NE24, NE25, NE26. NE21 comprises a provider-network-interface PNI21, while NE24 has port isolation capabilities and comprises two user-network-interfaces UNI24a, UNI24b. Two ports in the same network element, belonging to the same VLAN and having user data flow information associated, can not communicate with each other. Therefore, although the traffic class x2 is detected for both user-network-interfaces UNI24a, UNI24b, the port isolation indicates the unlikely situation that two distinct services are established, one for each of the user-network-interfaces UNI24a, UNI24b. Therefore, if port isolation capabilities are enabled in NE24, the two user-network-interfaces UNI24a, UNI24b are end points for different services. However, in case port isolation is disabled in NE24, the end points detected in the user-network-interfaces UNI24a, UNI24b of NE24 most likely belong to the same service.

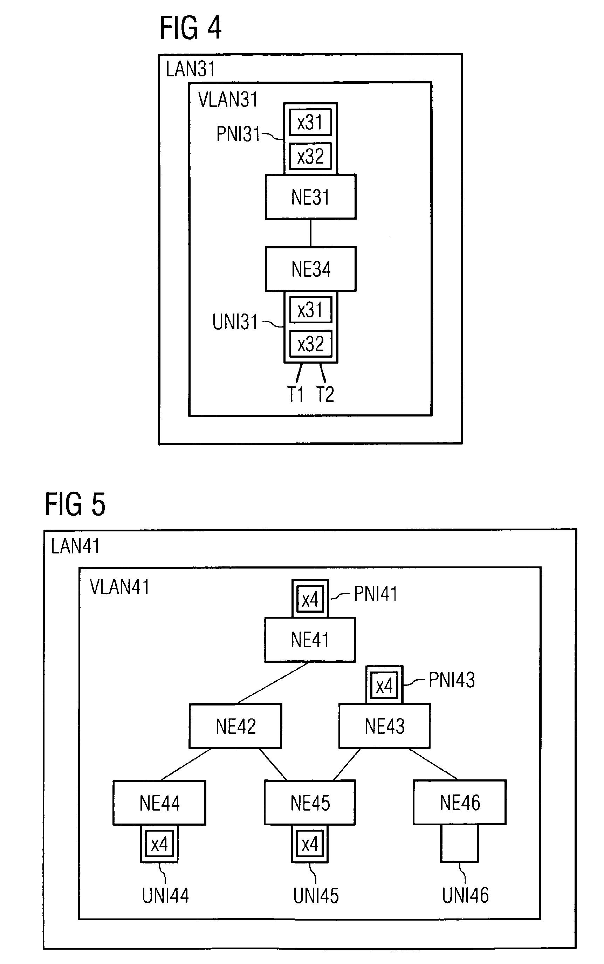

Figure 4 shows an embodiment where the capability of a user-network-interface to support more than one user data flow with different traffic classes x3a, x3b within a VLAN is discovered. In the embodiment of figure 4, two E-lines are implemented between the network elements NE31 and NE32. First the end points of the virtual local area network VLAN31 are discovered. In a further step, the user data flows T1, T2, based on the two traffic classes x31, x32 belonging to two different services are discovered due to their different traffic classes x31, x32 within the UNI32 and the PNI31.

Figure 5 describes an embodiment of the invention based on a network architecture where a service uses a multipoint to multipoint connection. Within the VLAN41 a service is discovered by detecting identical QOS-data x4 in the provider-network-interfaces PNI41, PNI43 and in the user-network-interfaces UNI44, UNI45.

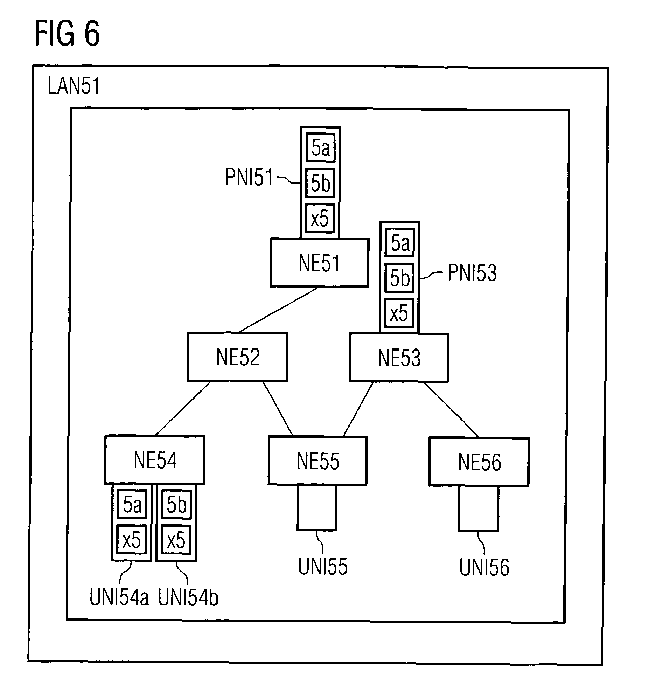

Figure 6 describes an embodiment of the invention based on a network architecture where two virtual connections according to different identifications 5a and 5b are detected. Each of the virtual connections uses the two provider-network-interfaces PNI51 and PNI53 together with one of the user-network-interfaces UNI54a or UNI54b of the network element NE54, having port isolation enabled. Although the same traffic class x5 or other QoS-data might be detected by UNI54a and UNI54b, the services used by UNI54a and UNI54b are not the same, if they were detected within the same virtual connection.

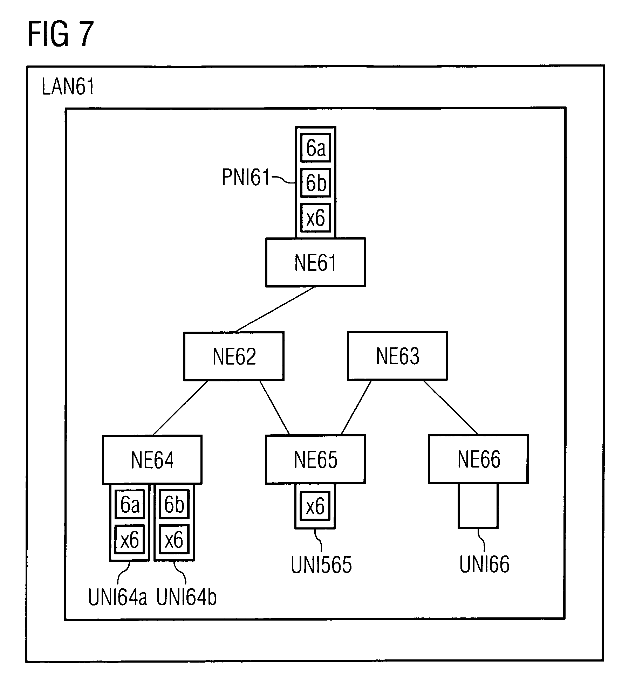

Figure 7 describes an embodiment of the invention based on a network architecture where two virtual connections according to different VLAN-identifications 6a and 6b are detected. Each of the virtual connections uses a provider-network-interfaces PNI61 together with one of the user-network-interfaces UNI64a or UNI64b of the network element NE64 NE64 has port isolation enabled. Although the same traffic class x6 or other identical QoS-data might be detected by UNI64a and UNI64b, the services used by UNI64a and UNI64b are not interpreted to be the identical, since they were detected within different virtual connections. According to a preferred specification of the embodiment, NE64 is a DSLAM, while UNI64a and UNI64b connect different customers to the DSLAM. The identical traffic class x6 used by services that run in different virtual connections indicates that the two customers use the same kind of service, although, they do not use the same service.

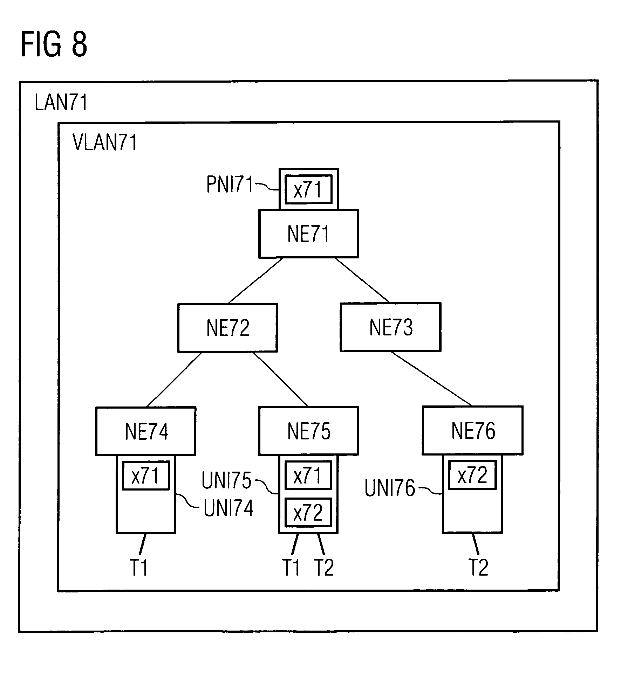

Figure 8 describes an embodiment of the invention based on a network architecture where two services are to be detected within a virtual local area network VLAN71. The first service is detected by its first traffic class x71 in the end points at PNI71, UNI74 and UNI75. The second service is detected based on its traffic class x72 in the end points at UNI75 and UNI76.

### List of Reference Signs

| | |
|---|---|
| 5a, 5b, 6a, 6b | Identification of a virtual |
| | connection, VLAN identifier |
| BRAS | Broadband Remote Access |
| | Server |
| DSLAM | Digital subscriber line |
| | access multiplexer |
| NE1, NE2, NE3, NE4, NE11, | Network element |
| NE12, NE13, NE14, NE15, NE16, | |
| NE21, NE22, NE23, NE24, NE25, | |
| NE26, NE31, NE32, NE33, NE34, | |
| NE35, NE36, NE41, NE42, NE43, | |
| NE44, NE45, NE46, NE51, NE52, | |
| NE53, NE54, NE55, NE56, NE61, | |
| NE62, NE63, NE64, NE65, NE66, | |
| NE71, NE72, NE73, NE74, NE75, | |
| NE76 | |
| NMS | network management system |
| PN, LAN11, LAN21, LAN31, | Network, physical network, |
| LAN41, LAN51, LAN61, LAN71 | provider network, local area |
| | network |
| PNI1, PNI11, PNI21, PNI31, | Provider-network-interface |
| PNI41, PNI43, PNI51, PNI53, | |
| PNI61, PNI71 | |
| TV, T, I, T1, T2 | Service, user data flow |
| UNI1, UNI14, UNI15, UNI16, | User-network-interface |
| UNI24a, UNI24b, UNI25, UNI26, | |
| UNI31, UNI44, UNI45, UNI46, | |
| UNI54a, UNI54b, UNI55, UNI56, | |
| UNI64a, UN164b, UNI65, UNI66, | |
| UNI74, UNI75, UNI76 | |
| VLAN1, VLAN21, VLAN31, VLAN41, | Virtual local area network |
| VLAN71 | |
| | |
| x1, x2, x31, x32, x4,x5, x6, | QoS-data |
| x71, x72 | |

## Claims

1. Method for discovering a service (TV, T, I) within an Ethernet based network (PN), whereas
- the Ethernet based network (PN) is managed by a network management system (NMS),
- the Ethernet based network (PN) is used by a virtual network (VLAN1), and
- the service (TV, T, I) operates within the virtual network (VLAN1), the method comprising the steps of
- identifying the virtual network (VLAN1) by identifying at least two end points (PNI, UNI1, UNI2, UNI3) of the virtual network (VLAN1),
**characterized by** the steps of
- furnishing the network management system (NMS) with QOS-data (x1, x2, x31, x32, x4,x5, x6, x71, x72) of the at least two end points (PNI, UNI1, UNI2, UNI3),
- identifying the service (TV, T, I) by correlating the QOS-data (x1, x2, x31, x32, x4,x5, x6, x71, x72) from the at least two end points (PNI, UNI1, UNI2, UNI3).

2. Method according to claim 1
**characterized in that**
the QOS-data (x1, x2, x31, x32, x4,x5, x6, x71, x72) comprises a traffic class and/or a bandwidth profile of the service.

3. Method according to claim 2
**characterized in that**
the traffic class is implemented according to at least the mandatory recommendations of IEEE 802.1p and/or IEEE 802.1d or to the technical specifications according to Metro Ethernet Forum.

4. Method according to claim 2
**characterized in that**
the bandwidth profile is implemented according to at least the mandatory recommendations of IEEE 802.1p and/or IEEE 802.1d or to the technical specifications according to Metro Ethernet Forum.

5. Method according to any one of the preceding claims
**characterized in that**
the virtual network is a virtual local area network (VLAN) which fulfils at least the mandatory recommendations of IEEE 802.1q or to the technical specifications according to Metro Ethernet Forum.

6. Method according to any one of the preceding claims
**characterized in that**
additionally to the QoS-data (x1, x2, x31, x32, x4,x5, x6, x71, x72), a type of the virtual network is identified in order to discover the service.

7. Method according to any one of the preceding claims
**characterized in that**
the correlating of the QoS-data (x1, x2, x31, x32, x4,x5, x6, x71, x72) is performed by identifying the same virtual network (VLAN1) and at least one identical QOS-data-parameter in the at least two end points (PNI, UNI1, UNI2, UNI3).

8. Method according to any one of the preceding claims
**characterized in that**
more than one service (TV, T, I) is comprised by the virtual network (VLAN1).

9. Method according to claim 8
**characterized in that**
each one of the more than one services (TV, T, I) use different quality of service settings.

10. Method according to any one of the preceding claims **characterized in that**
the virtual network (VLAN1) comprises a service (TV, T, I) for voice and/or a service for internet and/or a service for television.

11. Method according to any one of the preceding claims **characterized in that**
the furnishing of Qos-data (x1, x2, x31, x32, x4,x5, x6, x71, x72) to the network management system (NMS) is performed by collecting the QoS-data (x1, x2, x31, x32, x4,x5, x6, x71, x72) from the at least two end points (PNI, UNI1) and transferring the QOS-data (x1, x2, x31, x32, x4,x5, x6, x71, x72) to the network management system (NMS).

12. A system comprising means that are adapted to perform the method steps of any one of the preceding claims.

13. A network management system comprising means that are adapted to perform the method steps of any one of the claims 1 to 11.
